# EUROPEAN PATENT SPECIFICATION

(11) **EP 1 022 841 B1**
(45) Date of publication and mention of the grant of the patent: **10.10.2007**
(21) Application number: 00200137.8
(22) Date of filing: 14.01.2000
(51) Int. Cl.: H02K 5/128, H02P 6/18, F04C 15/00, F04D 29/62

(54) **Pump unit particularly for medical and food use**
Pumpenaggregat, insbesondere für medizinische Verwendung oder für Nahrungsmittel
Unité de pompage, en particulier à usage médical ou pour produits alimentaires

(30) Priority: 19.01.1999 IT RE990003
(43) Date of publication of application: 26.07.2000
(73) Proprietor: Croci, Gabriele, 42015 Correggio (Reggio Emilia) (IT)
(72) Inventor: Croci, Gabriele, 42015 Correggio (Reggio Emilia) (IT)
(74) Representative: Corradini, Corrado

(56) References cited:
- EP-A- 0 148 343
- EP-A- 0 610 826
- DE-C- 19 525 704
- US-A- 4 726 738
- US-A- 5 536 987
- US-A- 5 634 987

## Description

This invention relates to electric motors used for operating pumps, and particularly to those used for operating pumps intended for food or medical use.

The hygiene aspects of pumps for liquids for food use or for medicines in liquid form must be carefully controlled in that the pumped liquid must not come into contact with contaminants. To satisfy this requirement, in such pumps the impeller shaft is not mechanically connected to the motor shaft, these shafts instead being connected together by an electromagnetic coupling.

In particular, that free end of the impeller shaft emerging from the pump carries a pole wheel consisting of radial field electric magnets the number of poles of which depends on the type of application.

Said pole wheel is positioned inside a jacket in the shape of a cup of circular cross-section, which extends from the pump casing to form a chamber isolated from the outside. Said jacket has an inner diameter of a few tenths of a millimetre greater than the outer diameter of the pole wheel, and is generally constructed of amagnetic stainless steel.

Outside said jacket there is an outer second pole wheel having a number of poles equal to the number of poles of said inner first pole wheel.

Said second pole wheel is mechanically connected to an electric motor shaft in such a manner that on rotating the motor shaft and hence the outer pole wheel, this rotates by induction the inner pole wheel connected to the pump impeller.

Although the described solution perfectly performs the function for which it is provided, it presents certain drawbacks.

A first drawback derives from the overall size due to the in-line arrangement of the pump, the electromagnetic coupling and the electric drive motor.

A second drawback derives from the fact that if the electric motor has a high static torque and good acceleration the inner pole wheel disengages from the outer pole wheel and the impeller does not move.

To solve the first drawback pumps have been proposed, one of which is fully described in US5197865, in which the outer pole wheel is replaced by the stator of a stepping motor having a number of stator poles different from the number of rotor poles.

The use of a stepping motor makes it necessary to use Hall probes or similar devices to exactly identify the position of the rotor relative to the stator field to prevent such current absorption as to cause excessive stator heating. In addition, the use of a stepping motor requires the use of a costly and complicated control system which makes the product economically less desirable. There is also the drawback of more complicated equipment construction due essentially to the power conductors for the Hall probes, for which two are required for each phase winding, to be added to the two power conductors for each phase.

Document EP 610826 discloses a centrifugal pump of the type comprising a supporting body for a permanent-magnet synchronous motor with an impeller coupled to its rotor, and for a volute in which the impeller is accommodated. The body and the volute form a sealed housing which contains the rotor and the impeller in respective chambers, separating them from the stator part of the motor. The rotor is rigidly coupled to a shaft that rotates on sliding bearings supported by elastic supports which are locked in the corresponding chamber; one of these supports forms a ring for providing hydraulic sealing between the two chambers of the container. The centrifugal pump is operated through an electronic board which is suitable to achieve the unidirectional rotation of the rotor of a permanent-magnet synchronous motor, but not to adjust the output torque of the electric motor to the load torque required.

The object of the invention is to overcome the stated drawbacks within the framework of a rational, reliable and low-cost solution.

The invention attains said object by providing a motor-pump unit, as defined in claim 1,
in which the motor rotor is mechanically connected to the pump impeller while at the same time being physically isolated from the stator by a jacket of amagnetic material.

Specifically, the stator, positioned outside the jacket of amagnetic material has a three-phase winding with a number of poles equal to the number of poles of the rotor winding.

To obtain a high static torque the invention is powered by an electronic power circuit which generates a system of three-phase currents, the frequency of which gradually increases starting from zero, by following an appropriate acceleration ramp.

Said electronic power circuit is controlled by a control circuit comprising a microprocessor able to measure the counter-electromotive force arising in the stator, starting from a minimum value corresponding to about one quarter of the predetermined normal working r.p.m. In particular, the microprocessor is able to sense when the counter-electromotive force developing in the stator passes through zero, and hence identify the instantaneous position of the rotor. In this manner the motor current absorption can be controlled on the basis of the applied resistant torque. This enables current absorption to be limited by feeding the motor with only that current necessary for operating the load, so preventing damaging overheating of the electrical circuits.

In a simplified embodiment, the motor of the invention can be powered instead by a usual inverter. In this case however, the current absorbed by the motor is always equal to the maximum current, required to provide the maximum torque.

The slope of the powering current diagram (ramp) for the motor evidently depends both on the resistant torque and on the moment of inertia of the rotating masses, such as the rotor and impeller.

The special characteristics of the invention are defined in the claims.

The constructional and functional characteristics of the invention will be apparent from the ensuing description of a preferred embodiment thereof given by way of non-limiting example and illustrated on the accompanying drawings.

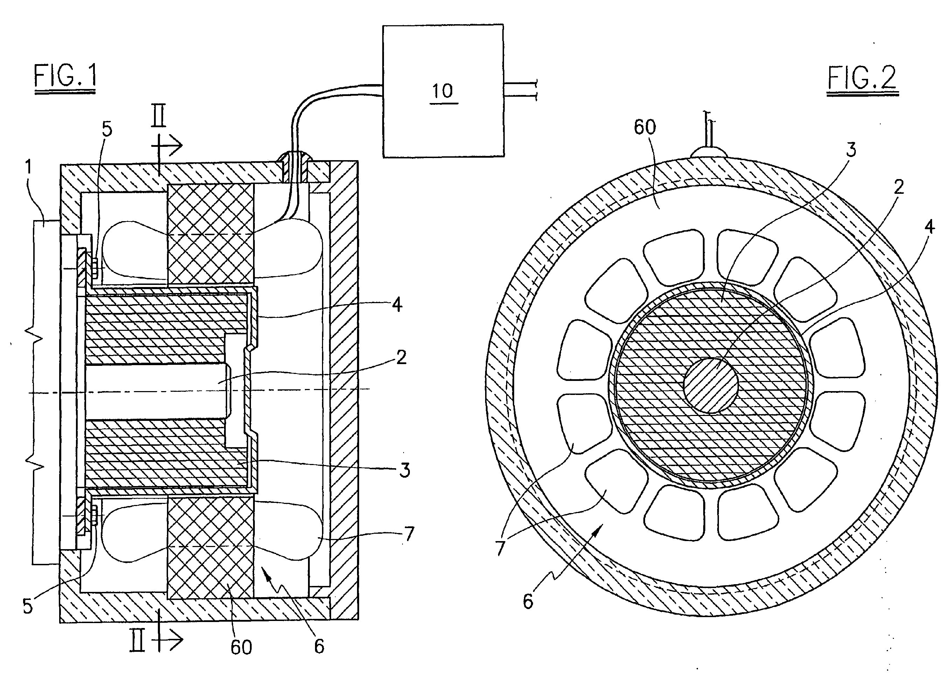

Figure 1 is a partial axial section through the invention.
Figure 2 is a section on the line II-II of Figure 1.
Figure 3 is a schematic view of the control and power circuit used by the invention.
Figure 4 is a detailed view of the driver used by the invention, with the relative components.
Figure 5 is a schematic view of the processor used by the invention.

Said figures show the pump casing 1 from which there emerges the impeller shaft 2 carrying the pole wheel 3, which forms the rotor of the electric drive motor for the pump, as will be apparent hereinafter.

In detail, the pole wheel 3 is fixed on the shaft 2 by suitable adhesives, but could instead be connected mechanically for example by a usual key.

External to the pole wheel there is provided the jacket 4, which is fixed to the pump casing 1 by screws 5 to form a sealed chamber.

The walls of the jacket 4 have a thickness of a few tenths of a millimetre and are constructed of amagnetic stainless steel.

The stator, consisting of the usual core 60 carrying the winding 7, is positioned outside the jacket 4. The stator 6 has the same number of pairs of poles as the rotor, and is formed in such a manner that the average induction at the air gap due to the magnetizing current absorbed by the winding 7 is about equal to or greater than that of the pole wheel 3. If the pole wheel is of ferrite the average induction at the air gap must be of the order of 0.3 Tesla, whereas if the pole wheel is of rare earths the average induction at the air gap must be of the order of 0.8-1 Tesla.

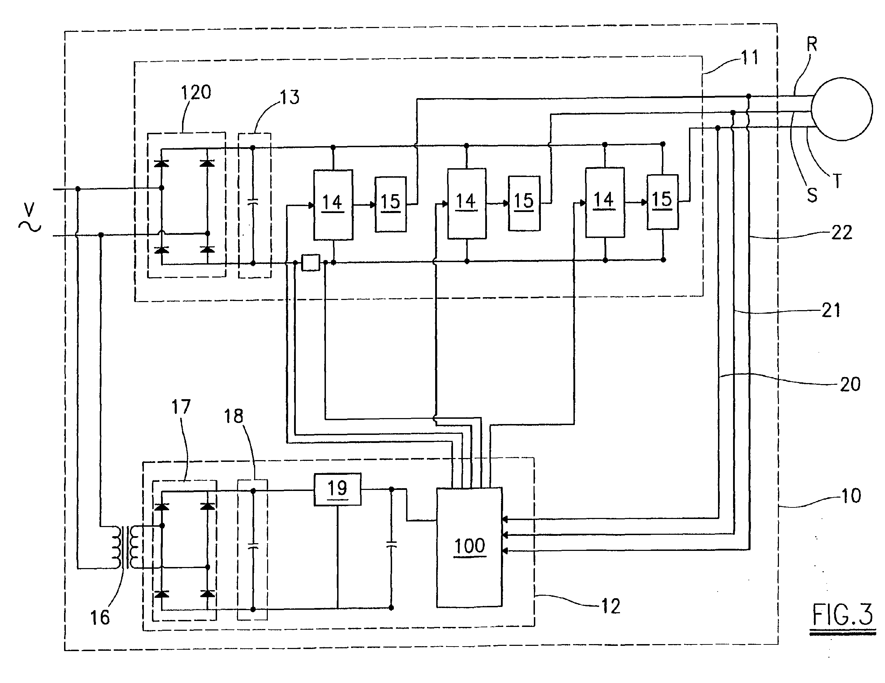

In order for the rotor to remain coupled to the poles of the rotating magnetic field of the stator 6, this is powered by a power and control circuit 10 shown in Figures 3, 4 and 5.

Figure 3 shows the circuit 10, comprising a power circuit 11 and a control circuit 12.

The power circuit 11 comprises a bridge rectifier 120 connected to the single-phase alternating current mains supply, and downstream to a filter capacitor 13. Downstream of the filter capacitor 13 there are provided means for feeding current to the stator, which in the illustrated example comprise three usual identical drivers 14, of type LM6386 manufactured by SGS THOMPSON.

One of the motor feed lines R, S, T is connected to each of the drivers 14, between each of the lines R, S, T and each of the drivers 14 there being interposed a usual IGBT bridge 15 (SGS THOMPSON).

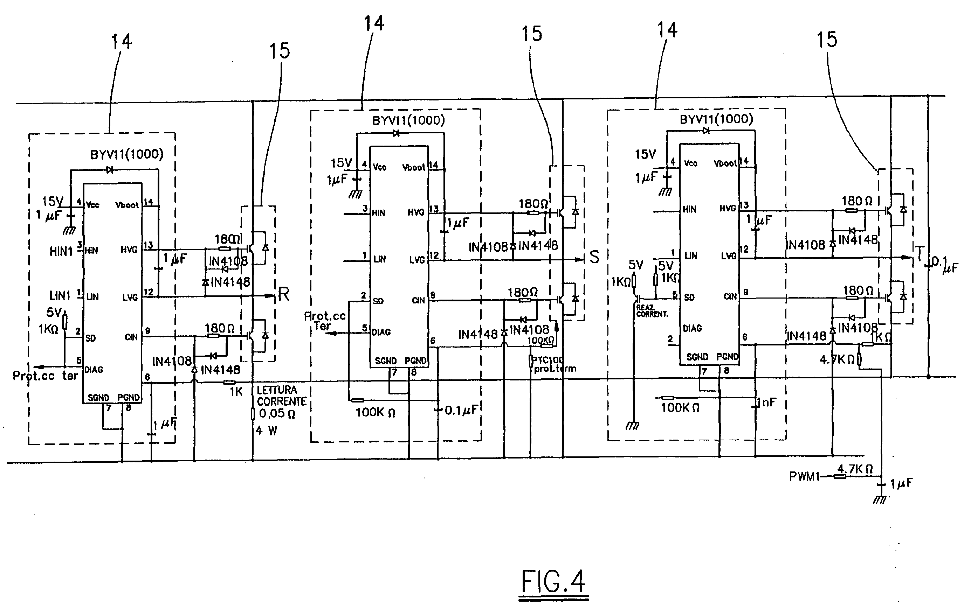

Figure 4 is a detailed view of the drivers 14 and IGBT bridges 15, with their relative known operating circuits supplied by the manufacturer of the said components. The drivers 14 are provided with comparators giving protection against short circuits, protection against temperature increase, and delivered current limitation on the basis of the resistant torque.

The drivers 14 are controlled by a microprocessor 100, type ST72141 manufactured by SGS THOMPSON, powered by the same single-phase supply feeding the power circuit 11, via a 220/12 V transformer 16 of 2 VA power, the secondary of which is connected to a usual diode rectifier 17, downstream of which there is a filter capacitor 18 to which the power unit 19 of the microprocessor 100 is connected. The power unit 19 is of type 78L05 manufactured by SGS THOMPSON.

The microprocessor 100 is connected to the drivers 14 via the outputs LIN1, LIN2, LIN3 and the inputs HIN1, HIN2, HIN3, and to the lines R, S, T of the three-phase electric motor via the conductors 20, 21, 22, through which the microprocessor 100 is able to measure the counter-electromotive force arising in the three-phase stator of the electric motor, and hence to regulate the current absorbed by the electric motor on the basis of the predetermined motor speed. It should be noted that the counter-electromotive force depends on the rotor speed.

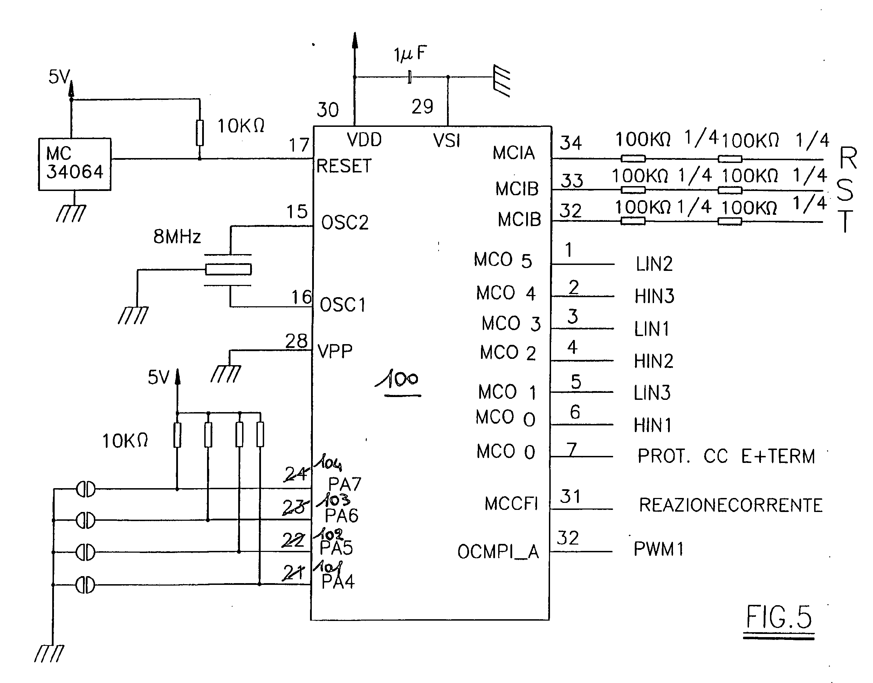

The microprocessor 100 is shown in detail in Figure 5, from which it can be seen that four predetermined speeds can be preselected by the user via the terminals 101, 102, 103 and 104.

The invention operates in the following manner.

The current absorbed from the power line is equal to the maximum allowable current until the counter-electromotive force arising within the stator assumes a minimum value such as to be able to be measured by the microprocessor 100. Using the microprocessor type ST72141 manufactured by SGS THOMPSON, this minimum value is 40 V.

When the microprocessor is able to measure said counter-electromotive force, it is also able to identify its passages through zero and hence the instantaneous position of the rotor, which is always in phase with said counter-electromotive force. From that moment in which the microprocessor 100 measures the minimum counter-electromotive force, the current absorbed by the motor is no longer the maximum allowable current, but becomes a function of the resistant torque, in that the microprocessor controls the power to the drivers 14 on the basis of the instantaneous measured value of the counter-electromotive force, so as to operate each of the drivers 14 alternately for a predetermined period. In this manner, motor current control is achieved.

The invention can instead be powered simply by a usual inverter, not shown, such as type ALTIVAR 08 manufactured by TELEMECANIQUE. Although powering by means of an inverter allows the invention to operate correctly, it does not enable the current absorbed by the motor to be controlled, hence this solution is suitable only for those applications in which the cost must be kept particularly low, and for which current control of the electric motor is not required.

It should be noted that in those applications in which the said inverter is used, the slope of the acceleration ramp by which the motor is powered depends both on the moment of inertia of the rotor and on the resistant torque of the load.

## Claims

1. A pump unit particularly for medical and food use, comprising:
- a stator (6) provided with a number n of poles and powered via a power and control circuit (10), itself fed with alternating electric current;
- a rotor (3) having an equal number n of poles, which is fixed directly onto the shaft (2) of the pump (1);
- a jacket (4) of amagnetic material which isolates the rotor (3) from the outside and is positioned within the air gap between the rotor (3) and the stator (6),
**characterized by** the fact that said power and control circuit commanded by the value of a counter electromotive force induced by the rotor.

2. A pump unit as claimed in claim 1, **characterised in that** said power and control circuit (10) comprises an inverter of usual type arranged to power said stator by an appropriate acceleration ramp

3. A pump unit as claimed in claim 1, **characterised in that** said power and control circuit (10) comprises a microprocessor (100) arranged to control the triggering of suitable means (14) for feeding current to said stator (6), and to regulate their conduction time on the basis of the instantaneous read value of counter-electromotive force.

4. A unit as claimed in claim 3, **characterised in that** said feed means (14) are three identical drivers type LM6386.

5. A unit as claimed in claim 3, **characterised in that** said microprocessor (100) is of type ST72141 manufactured by SGS THOMPSON.

6. A pump unit as claimed in claim 1, **characterised in that** said isolating jacket is constructed of stainless steel.

7. A pump unit as claimed in claim 1, **characterised in that** the rotor is constructed of rare earth materials.

8. A pump unit as claimed in claim 1, **characterised in that** the rotor (3) is constructed of ferrite.

9. A pump unit as claimed in the preceding claims, **characterised in that** the average induction at the air gap is of the order of 0.3 Tesla.

10. A pump unit as claimed in the preceding claims, **characterised in that** the average induction at the air gap is of the order of 0.8-1 Tesla.

11. A pump unit as claimed in claims 1 and 2, **characterised in that** the slope of the inverter acceleration ramp varies as a function of the rotor moment of inertia and the _resistant torque.

## Patentansprüche

1. Pumpenaggregat, insbesondere für die medizinische Verwendung und für Lebensmittel, welche folgendes aufweist:
- Einen Stator (6), welcher mit einer Anzahl n von Polen versehen und über eine Leistungs- und Steuerschaltung (10) mit Energie versorgt ist, welche selbst mit elektrischem Wechselstrom versorgt ist;
- Einen Rotor (3), welcher eine entsprechende Anzahl n von Polen aufweist und welcher direkt auf der Welle (2) der Pumpe (1) befestigt ist;
- Einen Mantel (4) aus amagnetischem Material, welcher den Rotor (3) von der Außenseite isoliert und innerhalb des Luftspalts zwischen dem Rotor (3) und dem Stator (6) angeordnet ist,
**dadurch gekennzeichnet, dass**
die Leistungs- und Steuerschaltung durch den Wert einer gegenelektromotorischen Kraft gesteuert ist, welche durch den Rotor induziert wird.

2. Pumpenaggregat nach Anspruch 1,
**dadurch gekennzeichnet, dass**
die Leistungs- und Steuerschaltung (10) einen Wechselrichter von bekannter Bauart aufweist, welcher dafür vorgesehen ist, den Stator mit einer geeigneten Beschleunigungsrampe mit Energie zu versorgen.

3. Pumpe nach Anspruch 1,
**dadurch gekennzeichnet, dass**
die Leistungs- und Steuerschaltung (10) einen Mikroprozessor (100) aufweist, welcher dafür vorgesehen ist, die Ansteuerung einer geeigneten Einrichtung (14) zur Versorgung des Stators (16) mit Strom zu steuern und ihre Brenndauer auf der Basis des Momentanablesewerts der gegenelektromotorischen Kraft zu regulieren.

4. Einheit nach Anspruch 3,
**dadurch gekennzeichnet , dass**
die Versorgungseinrichtung (14) drei identische Treiber des Typs LM6386 aufweist.

5. Einheit nach Anspruch 3,
**dadurch gekennzeichnet, dass**
der Mikroprozessor (100) von dem Typ SC72141, hergestellt von SGS THOMPSON, ist.

6. Pumpeneinheit nach Anspruch 1,
**dadurch gekennzeichnet, dass**
der Isoliermantel aus rostfreiem Stahl hergestellt ist.

7. Pumpeneinheit nach Anspruch 1,
**dadurch gekennzeichnet, dass**
der Rotor aus seltenem Erdmaterial hergestellt ist.

8. Pumpeneinheit nach Anspruch 1,
**dadurch gekennzeichnet, dass**
der Rotor (3) aus Eisenoxid hergestellt ist.

9. Pumpeneinheit nach den vorhergehenden Ansprüchen,
**dadurch gekennzeichnet, dass**
die durchschnittliche Induktion an dem Luftspalt in dem Bereich von 0,3 Tesla liegt.

10. Pumpeneinheit nach den vorhergehenden Ansprüchen,
**dadurch gekennzeichnet, dass**
die durchschnittliche Induktion an dem Luftspalt in der Größenordnung von 0,8 - 1 Tesla liegt.

11. Pumpeneinheit nach Anspruch 1 und 2,
**dadurch gekennzeichnet, dass**
der Anstieg der Beschleunigungsrampe des Wechselrichters als eine Funktion des Trägheitsmoments und des Widerstandsmoments des Rotors variiert.

## Revendications

1. Unité de pompe destinée plus précisément à des applications médicales et alimentaires, comprenant :
un stator (6) ayant un nombre n de pôles et alimenté par un circuit (10) d'alimentation et de commande alimenté lui-même en courant électrique alternatif,
un rotor (3) ayant un même nombre n de pôles, qui est directement fixé sur l'arbre (2) de la pompe (1), et
une enveloppe (4) d'un matériau amagnétique qui isole le rotor (3) de l'extérieur et qui est disposée dans l'entrefer formé entre le rotor (3) et le stator (6),
**caractérisée par le fait que** le circuit d'alimentation et de commande est commandé par la valeur d'une force contre-électromotrice induite par le rotor.

2. Unité de pompe selon la revendication 1, **caractérisée en ce que** le circuit d'alimentation et de commande (10) comporte un convertisseur de type habituel destiné à alimenter le stator avec une variation progressive convenable d'accélération.

3. Unité de pompe selon la revendication 1, **caractérisée en ce que** le circuit d'alimentation et de commande (10) comporte un microprocesseur (100) destiné à commander le déclenchement d'un dispositif convenable (14) destiné à transmettre du courant au stator (6), et à réguler son temps de conduction en fonction de la valeur instantanée lue de la force contre-électromotrice.

4. Unité selon la revendication 3, **caractérisée en ce que** le dispositif d'alimentation (14) a trois circuits identiques de pilotage de type LM6386.

5. Unité selon la revendication 3, **caractérisée en ce que** le microprocesseur (100) est de type ST72141 fabriqué par SGS THOMPSON.

6. Unité de pompe selon la revendication 1, **caractérisée en ce que** l'enveloppe d'isolement est constituée d'acier inoxydable.

7. Unité de pompe selon la revendication 1, **caractérisée en ce que** le rotor est constitué de matériaux des terres rares.

8. Unité de, pompe selon la revendication 1, **caractérisée en ce que** le rotor (3) est constitué de ferrite.

9. Unité de pompe selon les revendications précédentes, **caractérisée en ce que** l'induction moyenne dans l'entrefer est de l'ordre de 0,3 T.

10. Unité de pompe selon l'une quelconque des revendications précédentes, **caractérisée en ce que** l'induction moyenne à l'entrefer est de l'ordre de 0,8 à 1 T.

11. Unité de pompe selon les revendications 1 et 2, **caractérisée en ce que** la pente de la variation progressive d'accélération du convertisseur varie en fonction du moment d'inertie du rotor et du couple résistant.
